# EUROPÄISCHE PATENTSCHRIFT

(11) **EP 0 866 925 B1**
(45) Veröffentlichungstag und Bekanntmachung des Hinweises auf die Patenterteilung: **01.03.2000**
(21) Anmeldenummer: 96938900.6
(22) Anmeldetag: 03.12.1996
(51) Int. Cl.: F16G 1/08, B65G 15/32

(54) **GEWEBELOSER RIEMEN**
FABRICLESS BELT
COURROIE SANS TISSU

(30) Priorität: 13.12.1995 CH 352095
(43) Veröffentlichungstag der Anmeldung: 30.09.1998
(73) Patentinhaber: Habasit AG, CH-4153 Reinach (CH)
(72) Erfinder: KLUMB, Werner, D-79541 Lörrach (DE); SCHMIDT, Burghardt, CH-4143 Dornach (CH)
(74) Vertreter: Ullrich, Gerhard, Dr.
(86) Internationale Anmeldenummer: CH9600425
(87) Internationale Veröffentlichungsnummer: WO9721938

(56) Entgegenhaltungen:
- DE-A- 2 114 746
- DE-A- 4 039 584

## Beschreibung

Die Erfindung bezieht sich auf einen gewebelosen Riemen mit einer gereckten Polyamidschicht als Zugschicht, wie er im Oberbegriff des unabhängigen Patentanspruchs 1 definiert ist, und auf ein Verfahren zur Herstellung eines solchen gewebelosen Riemens.

Bisher normalerweise unter anderem als Antriebsriemen oder Transportbänder verwendete zugfeste Riemen enthalten eine Folie als Zugschicht, die beidseits von einem Gewebe, das mit einem Haftvermittlerschicht versehen ist, mit jeweils einer darauf angeordneten Gummi-Reibschicht umgeben ist. Das Gewebe hat dabei die Funktion der mechanischen Stabilisierung der Zugschicht und stellt ein wichtiges Verbindungselement für die Gummi-Reibschicht und die Zugschicht dar. Durch solche Riemen werden zum Teil grosse Kräfte übertragen bzw. aufgenommen und es werden deshalb hohe Anforderungen an die Bindungen zwischen den einzelnen Schichten gestellt. Ein Nachteil dieser Riemen ist, dass Gewebeschichten benötigt werden, welche sich nachteilig auf das Endlosmachen sowie den Eigenenergieverbrauch und die Herstellungskosten des Riemens auswirken.

In der DE-OS 40 39 584 ist ein gewebeloser Riemen bzw. gewebe loses Band mit einer gereckten Polyamidfolie als Zugschicht beschrieben, die auf mindestens einer Seite mit einem Haftvermittlerstrich versehen ist, auf dem eine Kautschukfolie als Gummi-Reibschicht im Verbund angeordnet ist. Der Haftvermittlerstrich besteht beispielsweise aus einer Lösung auf Wasser/Alkohol-Basis mit mindestens 15 Gew.-%, vorzugsweise 50 Gew.-% Resorcin und soll sicherstellen, dass die Anforderungen an die Haftfestigkeit erfüllt werden.

Dieser gewebelose Riemen weist den Nachteil auf, dass zur Herstellung des Verbundes zwischen der gereckten Polyamidfolie und der Kautschukfolie zuerst ein Haftvermittlerstrich auf die Polyamidfolie aufgetragen und dann getrocknet werden muss. Erst anschliessend erfolgt unter Druck und bei einer Temperatur zwischen 140°C und 190°C die Bildung des Verbundes. Aufgrund der verfahrenstechnischen Komplexität ist es aber schwierig, gleichmässige Haftung zu erzielen. Deshalb hat sich diese Lösung im Markt nicht durchgesetzt.

In der DE-OS 21 14 746 ist ein Verfahren zur Herstellung eines in einem Förderband verwendbaren flexiblen laminierten Materials beschrieben, bei dem eine Schicht aus einem elastomeren Material, das Resorcin und eine beim Erhitzen ein Methylendonator werdende Verbindung enthält, auf einen Polyamidfilm aufgebracht und anschliessend das Gefüge erhitzt wird. Für das Bewirken einer Haftung zwischen dem elastomeren Material und dem Polyamid sind hier sowohl das Resorcin als auch der Methylendonator notwendig. Ausserdem ist dieses Verfahren bei einer gereckten Polyamidschicht wegen deren eine Benetzung erschwerenden Oberflächenpolarität nicht ohne weiteres verwendbar.

Angesichts der Nachteile der bisher bekannten, oben beschriebenen Riemen und Riemen-Herstellungsverfahren liegt der Erfindung die folgende Aufgabe zugrunde. Zu schaffen ist ein gewebeloser Riemen mit einer gereckten Polyamidschicht als Zugschicht, auf der eine Thermoplastschicht, die im wesentlichen aus Polyätherblockamiden oder Copolyamiden besteht, oder eine Gummischicht mit möglichst hoher Haftfestigkeit im Verbund angeordnet ist, ohne dass zur Herstellung des Verbundes ein Haftvermittlerstrich auf der gereckten Polyamidschicht oder der Gummischicht bzw. Thermoplastschicht aufgetragen werden muss oder ein Methylendonator notwendig ist. Die Herstellung des gewebelosen Riemens soll möglichst kostengünstig sein und er soll eine hohe Lebensdauer erreichen.

Dabei wird in der vorliegenden Beschreibung und in den Patentansprüchen unter Polyamidschicht nicht nur eine Schicht aus reinen, sondern auch aus schlagzugmodifizierten Polyamiden oder Polyamidmischungen verstanden.

Diese Aufgabe wird durch den erfindungsgemässen gewebelosen Riemen, wie er im unabhängigen Patentanspruch 1 definiert ist, und das erfindungsgemässe Verfahren zur Herstellung eines solchen gewebelosen Riemens, wie es im unabhängigen Patentanspruch 11 definiert ist, gelöst. Bevorzugte Ausführungsvarianten ergeben sich aus den abhängigen Patentansprüchen 2 bis 10.

Das Wesen der Erfindung besteht darin, dass eine auf einer gereckten Polyamidschicht im Verbund angeordnete Gummischicht mindestens 1 Gewichtsteil Resorcin, Phenol, Kresole oder Mischungen davon bezogen auf 100 Gewichtsteile Kautschuk enthält bzw. eine im Verbund angeordnete Thermoplastschicht 5 - 30 Gew.-% Resorcin, Phenol, Kresole oder Mischungen davon enthält. Die Gummischicht bzw. Thermoplastschicht haftet ohne Mitwirkung eines Methylendonators unmittelbar auf der gereckten Polyamidschicht, welche die Zugschicht eines gewebelosen Riemens bildet.

Bei der Herstellung eines gewebelosen Riemens wird durch Vermischung von mindestens 1 Gewichtsteil Resorcin, Phenol, Kresole oder Mischungen davon mit 100 Gewichtsteilen Kautschuk bzw. 5 - 30 Gew.-% Resorcin, Phenol, Kresole oder Mischungen davon mit Polyätherblockamiden oder Copolyamiden - und weiteren, für die Erfindung nicht wesentlichen Zusatzstoffen - auf üblichen Mischaggregaten der Industrie mindestens eine Gummimischung bzw. mindestens ein Thermoplast und daraus dann mindestens eine Gummischicht bzw. mindestens eine Thermoplastschicht auf bekannte Weise erzeugt. Diese Gummi- bzw. Thermoplastschicht oder -schichten wird bzw. werden anschliessend auf eine gereckte Polyamidschicht aufgebracht und unter Druck und bei einer Temperatur zwischen 140°C und 190°C ohne Mitwirkung eines Methylendonators mit dieser verbunden.

Der Verbund zwischen gereckter Polyamidschicht und Gummischicht bzw. Thermoplastschicht weist eine Haftfestigkeit auf, die den hohen Anforderungen an Antriebsriemen oder Transportbänder in weiten Einsatzbereichen vollauf zu genügen vermag.

Dadurch, dass zur Erzeugung des Verbundes kein Haftvermittlerstrich aufgetragen werden muss, entfällt bei der Herstellung eines gewebelosen Riemens ein lohn- und zeitintensiver Verfahrensschritt und das Risiko eines ungleichmässigen Auftragens, was zu tieferen Gestehungskosten führt. Es wird auch kein Lösungsmittel benötigt, um den eigentlichen haftvermittelnden Stoff auftragen zu können, was zur Schonung der Umwelt beiträgt.

Die Herstellung des Verbundes zwischen gereckter Polyamidschicht und Gummischicht bzw. Thermoplastschicht erfolgt bei Temperaturen, die genügend tief sind, damit die Reckung der Polyamidschicht nicht wieder rückgängig gemacht wird.

Riemen gemäss obiger Beschreibung zeichnen sich durch sehr dauerhafte Endverbindungen und tiefen Eigenenergieverbrauch insbesondere bei einer hohen Biegefrequenz aus.

Im folgenden werden der erfindungsgemässe gewebelose Riemen und das Verfahren zur Herstellung eines solchen Riemens unter Bezugnahme auf die beigefügten Zeichnungen und anhand von zwei Ausführungsbeispielen detaillierter beschrieben. Es zeigen:
- Figur 1 -: ein erstes Ausführungsbeispiel eines erfindungsgemässen gewebelosen Riemens in schematischer Querschnittsdarstellung und
- Figur 2 -: ein zweites Ausführungsbeispiel eines erfindungsgemässen gewebelosen Riemens in schematischer Querschnittsdarstellung.

### Figur 1

Der dargestellte erfindungsgemässe gewebelose Riemen enthält eine gereckte Polyamidschicht 1, die die Zugfestigkeit verleihende Zugschicht des Riemens bildet. Als für die gereckte Polyamidschicht geeignete Materialien haben sich Polyamid 6, Polyamid 66, Polyamid 12 und Gemische davon erwiesen.

Auf beiden Seiten der gereckten Polyamidschicht 1 sind Gummischichten 2, 3 im Verbund angeordnet. Diese Gummischichten 2, 3 sind je nach vorgesehenem Verwendungszweck so zusammengesetzt, dass sie die spezifischen Bedingungen für den Einsatz als Antriebsriemen oder Transportband erfüllen. Im allgemeinen müssen sie insbesondere eine gewisse Alterungs- und Abriebbeständigkeit und einen bestimmten Reibungskoeffizienten aufweisen.

Zur Herstellung von erfindungsgemässen Gummischichten 2, 3 können verschiedene Kautschuk-Materialien als Grundmaterial dienen. Vorzugsweise wird Nitrilkautschuk oder carboxylierter oder hydrierter Nitrilkautschuk verwendet. Geeignet sind aber insbesondere auch Polychloropren-, Butyl-, Äthylen-Propylen-, Äthylen-Propylen-Dien-, Epichlorhydrin-, Polyurethan-, Butadien-, Styrolbutadien- oder Naturkautschuk oder chloriertes oder chlorsulfoniertes Polyäthylen.

Dem Grundmaterial wird Resorcin, Phenol, Kresole oder Mischungen davon beigemischt und zwar in einer Dosierung von mindestens 1 Gewichtsteil, beispielsweise 10 Gewichtsteilen Resorcin, Phenol, Kresole oder Mischungen davon bezogen auf 100 Gewichtsteile Kautschuk. Die Beimischung von Resorcin, Phenol, Kresole oder Mischungen davon erlaubt es, die Gummischichten 2, 3 unmittelbar mit der gereckten Polyamidschicht 1 zu verbinden, ohne dass ein zusätzlicher Haftvermittlerstrich benötigt wird.

Zur Herstellung des gewebelosen Riemens werden die Gummischichten 2, 3 auf die gereckte Polyamidschicht 1 aufgebracht und unter Druck und bei einer Temperatur von 140°C bis 190°C mit dieser verbunden.

### Figur 2

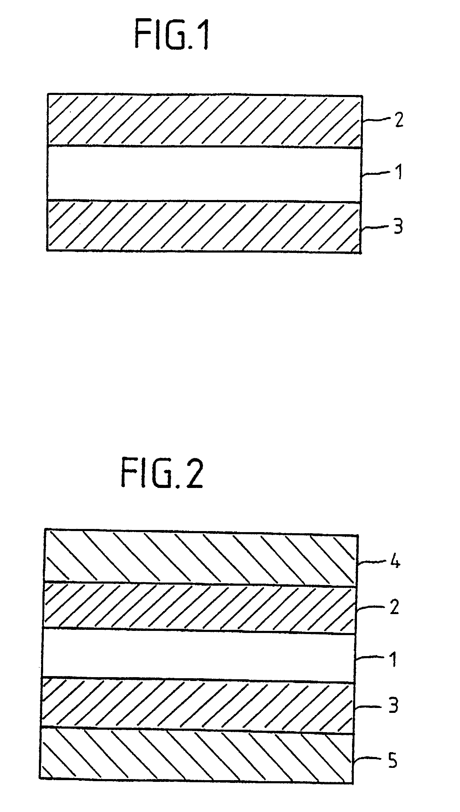

Auf beiden Seiten der die Zugschicht bildenden gereckten Polyamidschicht 1 sind Gummi- oder Thermoplastschichten 2, 3 angeordnet, die mindestens 1 Gewichtsteil, beispielsweise 10 Gewichtsteile Resorcin, Phenol, Kresole oder Mischungen davon bezogen auf 100 Gewichtsteile Kautschuk bzw. mindestens 5 - 30 Gew.-%, beispielsweise 20 Gew,-% Resorcin, Phenol, Kresole oder Mischungen davon enthalten. Als Grundmaterial für die Gummischichten können wiederum die in dem im Zusammenhang mit Figur 1 beschriebenen Ausführungsbeispiel erwähnten Kautschuk-Materialien verwendet werden. Die Thermoplastschichten können aus Polyätherblockamiden oder Copolyamiden bestehen. Die Gummi- oder Thermoplastschichten 2, 3 bilden beim vorliegenden Ausführungsbeispiel aber nicht die äussersten Riemenschichten, sondern nur Zwischenschichten. Sie sind deshalb so zusammengesetzt, dass sie eine optimale Haftung zu der gereckten Polyamidschicht 1 aufweisen, ohne dass Rücksicht auf die Abriebbeständigkeit oder den Reibungskoeffizienten genommen werden muss.

Auf den von der gereckten Polyamidschicht 1 abgewandten Seiten der Gummi- oder Thermoplastschichten 2, 3 sind Reibschichten 4, 5 aus Kautschuk angebracht, die je nach vorgesehenem Verwendungszweck auf bekannte Weise so zusammengesetzt sind, dass sie die spezifischen Bedingungen für den Einsatz als Antriebsriemen oder Transportband erfüllen. Die Reibschichten 4, 5 können aus demselben Kautschuk bestehen wie die Gummischichten 2, 3 oder aus einem anderen. Im allgemeinen müssen sie insbesondere eine gewisse Alterungs- und Abriebbeständigkeit und einen bestimmten Reibungskoeffizienten aufweisen. Eine den Anforderungen genügende Haftung auf den entsprechenden Gummi- oder Thermoplastschichten 2, 3 wird durch das diesen beigemischte Resorcin, Phenol, Kresol oder Mischungen davon gewährleistet. Die Herstellung des Verbundes erfolgt auch hier unter Druck und bei einer Temperatur von 140°C und 190°C.

Zu den vorbeschriebenen gewebelosen Riemen sind weitere konstruktive Variationen realisierbar. Hier ausdrücklich erwähnt seien noch:
- Der Schichtaufbau des gewebelosen Riemens kann auch unsymmetrisch sein. Denkbar ist z.B. ein Aufbau Gummischicht - gereckte Polyamidschicht - Gummischicht - Reibschicht oder auch Gummischicht - gereckte Polyamidschicht - Thermoplastschicht - Reibschicht, so dass die äusserste Riemenschicht auf der einen Seite durch eine resorcin-, phenol- oder kresolhaltige Gummischicht und auf der anderen Seite durch eine Reibschicht gebildet wird.
- Der gewebelose Riemen kann zusätzliche Schichten aufweisen, die ausserhalb des Verbundes Gummischicht bzw. Thermoplastschicht - gereckte Polyamidschicht angeordnet sind.

## Patentansprüche

1. Gewebeloser Riemen mit einer gereckten Polyamidschicht (1) als Zugschicht bei dem auf mindestens einer Seite der gereckten Polyamidschicht (1) eine Thermoplastschicht, die im wesentlichen aus Polyätherblockamiden oder Copolyamiden besteht, oder eine Gummischicht (2, 3) im Verbund angeordnet ist, dadurch gekennzeichnet, dass die Thermoplastschicht 5 - 30 Gew.-% Resorcin, Phenol, Kresole oder Mischungen davon bzw. die Gummischicht (2, 3) mindestens 1 Gewichtsteil Resorcin, Phenol, Kresole oder Mischungen davon bezogen auf 100 Gewichtsteile Kautschuk enthält und ohne Mitwirkung eines Methylendonators unmittelbar auf der gereckten Polyamidschicht (1) haftet.

2. Gewebeloser Riemen nach Anspruch 1, dadurch gekennzeichnet, dass auf jeder der beiden Seiten der gereckten Polyamidschicht (1) eine Thermoplastschicht oder eine Gummischicht (2, 3) im Verbund angeordnet ist, wobei diese beiden Schichten (2, 3) gleich oder unterschiedlich zusammengesetzt sind.

3. Gewebeloser Riemen nach Anspruch 1 oder 2, dadurch gekennzeichnet, dass die Gummischicht oder -schichten (2, 3) eine der beiden oder beide äussersten Riemenschichten bildet bzw. bilden.

4. Gewebeloser Riemen nach einem der Ansprüche 1 bis 3, dadurch gekennzeichnet, dass auf der Thermoplastschicht bzw. den Thermoplastschichten bzw. der Gummischicht bzw. mindestens einer der Gummischichten (2, 3) auf der von der gereckten Polyamidschicht (1) abgewandten Seite eine Reibschicht (4, 5) aus Kautschuk angeordnet ist.

5. Gewebeloser Riemen nach einem der Ansprüche 1 bis 4, dadurch gekennzeichnet, dass die Gummischicht (2, 3) bzw. mindestens eine der Gummischichten (2, 3) zwischen 5 und 15 Gewichtsteile Resorcin, Phenol, Kresole oder Mischungen davon bezogen auf 100 Gewichtsteile Kautschuk enthält.

6. Gewebeloser Riemen nach einem der Ansprüche 1 bis 5, dadurch gekennzeichnet, dass die Gummischicht (2, 3) bzw. mindestens eine der Gummischichten (2, 3) Nitrilkautschuk oder carboxylierten oder hydrierten Nitrilkautschuk enthält.

7. Gewebeloser Riemen nach einem der Ansprüche 1 bis 5, dadurch gekennzeichnet, dass die Gummischicht (2, 3) bzw. mindestens eine der Gummischichten (2, 3) Polychloropren-, Butyl-, Äthylen-Propylen-, Äthylen-Propylen-Dien-, Epichlorhydrin-, Polyurethan-, Butadien-, Styrolbutadien- oder Naturkautschuk oder chloriertes oder chlorsulfoniertes Polyäthylen enthält.

8. Gewebeloser Riemen nach einem der Ansprüche 1 bis 4, dadurch gekennzeichnet, dass die Thermoplastschicht bzw. mindestens eine der Thermoplastschichten 15 - 25 Gew.-% Resorcin, Phenol, Kresole oder Mischungen davon enthält.

9. Gewebeloser Riemen nach einem der Ansprüche 1 bis 8, dadurch gekennzeichnet, dass die gereckte Polyamidschicht (1) Polyamid 6, Polyamid 66 oder Polyamid 12 enthält.

10. Gewebeloser Riemen nach einem der Ansprüche 1 bis 9, dadurch gekennzeichnet, dass er als Antriebsriemen oder Transportband verwendbar ist.

11. Verfahren zur Herstellung eines gewebelosen Riemens nach Anspruch 1, dadurch gekennzeichnet, dass mindestens 1 Gewichtsteil Resorcin, Phenol, Kresole oder Mischungen davon mit 100 Gewichtsteilen Kautschuk zu mindestens einer Gummimischung bzw. 5 - 30 Gew.-% Resorcin, Phenol, Kresole oder Mischungen davon mit Polyätherblockamiden oder Copolyamiden zu mindestens einem Thermoplasten vermischt werden, aus der bzw. dem bzw. denen mindestens eine Gummischicht (2, 3) bzw. Thermoplastschicht erzeugt und anschliessend auf eine gereckte Polyamidschicht (1) aufgebracht und unter Druck und bei einer Temperatur zwischen 140°C und 190°C ohne Mitwirkung eines Methylendonators mit dieser verbunden wird.

## Claims

1. Fabric-free belt having an oriented polyamide layer (1) as a tension layer, in which a thermoplastic layer which consists essentially of polyetheramide block copolymers or copolyamides, or a rubber layer (2, 3), is arranged in the form of a laminate on at least one side of the oriented polyamide layer (1), characterized in that the thermoplastic layer contains 5 - 30% by weight of resorcinol, phenol, cresols or mixtures thereof or the rubber layer (2, 3) contains at least one part by weight, based on 100 parts by weight of rubber, of resorcinol, phenol, cresols or mixtures thereof, and adheres without contribution of a methylene donator directly to the oriented polyamide layer (1).

2. Fabric-free belt according to claim 1, characterized in that a thermoplastic layer or a rubber layer (2, 3) is arranged in the form of a laminate on each of the two sides of the oriented polyamide layer (1), these two layers (2, 3) having identical or different compositions.

3. Fabric-free belt according to claim 1 or 2, characterized in that the rubber layer or layers (2, 3) forms or form one of the two, or both, outermost belt layers.

4. Fabric-free belt according to any of claims 1 to 3, characterized in that a rubber friction layer (4, 5) is arranged on the thermoplastic layer or on the thermoplastic layers or on the rubber layer or on at least one of the rubber layers (2, 3), on the side facing away from the oriented polyamide layer (1).

5. Fabric-free belt according to any of claims 1 to 4, characterized in that the rubber layer (2, 3) or at least one of the rubber layers (2, 3) contains between 5 and 15 parts by weight, based on 100 parts by weight of rubber, of resorcinol, phenol, cresols or mixtures thereof.

6. Fabric-free belt according to any of claims 1 to 5, characterized in that the rubber layer (2, 3) or at least one of the rubber layers (2, 3) contains nitrile rubber or carboxylated or hydrogenated nitrile rubber.

7. Fabric-free belt according to any of claims 1 to 5, characterized in that the rubber layer (2, 3) or at least one of the rubber layers (2, 3) contains polychloroprene, butyl, ethylene/propylene, ethylene/propylene/diene, epichlorohydrin, polyurethane, butadiene, styrene/butadiene or natural rubber or chlorinated or chlorosulphonated polyethylene.

8. Fabric-free belt according to any of claims 1 to 4, characterized in that the thermoplastic layer or at least one of the thermoplastic layers contains 15 - 25% by weight of resorcinol, phenol, cresols or mixtures thereof.

9. Fabric-free belt according to any of claims 1 to 8, characterized in that the oriented polyamide layer (1) contains polyamide 6, polyamide 66 or polyamide 12.

10. Fabric-free belt according to any of claims 1 to 9, characterized in that it can be used as a drive belt or conveyor belt.

11. Process for the production of a fabric-free belt according to claim 1, characterized in that at least one part by weight of resorcinol, phenol, cresols or mixtures thereof are mixed with 100 parts by weight of rubber to give at least one rubber mixture, or 5 - 30% by weight of resorcinol, phenol, cresols or mixtures thereof are mixed with polyetheramide block copolymers or copolyamides to give at least one thermoplastic, from which rubber mixture or mixtures or from which thermoplastic or thermoplastics at least one rubber layer (2, 3) or thermoplastic layer, respectively, is produced and then applied to an oriented polyamide layer (1) and bonded to it under pressure and at a temperature between 140°C and 190°C without contribution of a methylene donator.

## Revendications

1. Courroie sans tissu comportant une couche de polyamide orientée (1) faisant office de couche tirante, dans laquelle est disposée dans le combiné sur au moins une face de la couche de polyamide orientée (1) une couche thermoplastique, qui est essentiellement constituée d'amides de blocage en polyéther ou de copolyamides, ou une couche en caoutchouc (2, 3), caractérisée en ce que la couche thermoplastique contient 5-30% en poids de résorcine, de phénol, de crésols ou des mélanges de ceux-ci ou, selon le cas, la couche de caoutchouc (2, 3) contient au moins 1 partie en poids de résorcine, de phénol, de crésols ou des mélanges de ceux-ci, sur base de 100 parties en poids de caoutchouc, et adhère directement, sans l'action conjointe d'un donneur de méthylène, à la couche de polyamide orientée (1).

2. Courroie sans tissu suivant la revendication 1, caractérisée en ce que sur chacune des deux faces de la couche de polyamide orientée (1) est disposée dans le combiné une couche thermoplastique ou une couche de caoutchouc (2, 3), ces deux couches (2, 3) étant composées de manière identique ou différente.

3. Courroie sans tissu suivant la revendication 1 ou 2, caractérisée en ce que la ou les couches de caoutchouc (2, 3) forme ou, selon le cas, forment l'une des deux ou les deux couches les plus extérieures de la courroie.

4. Courroie sans tissu suivant l'une quelconque des revendications 1 à 3, caractérisée en ce qu'une couche de frottement (4, 5) de caoutchouc est disposée sur la couche thermoplastique ou, selon le cas, les couches thermoplastiques ou, selon le cas, la couche de caoutchouc ou, selon le cas, au moins une des couches de caoutchouc (2, 3) sur la face opposée à la couche de polyamide orientée (1).

5. Courroie sans tissu suivant l'une quelconque des revendications 1 à 4, caractérisée en ce que la couche de caoutchouc (2, 3) ou, selon le cas, au moins une des couches de caoutchouc (2, 3) contient entre 5 et 15 parties en poids de résorcine, de phénol, de crésols ou des mélanges de ceux-ci, sur base de 100 parties en poids de caoutchouc.

6. Courroie sans tissu suivant l'une quelconque des revendications 1 à 5, caractérisée en ce que la couche de caoutchouc (2, 3) ou, selon le cas, au moins une des couches de caoutchouc (2, 3) contient du caoutchouc nitrile ou du caoutchouc nitrile carboxylé ou hydrotraité.

7. Courroie sans tissu suivant l'une quelconque des revendications 1 à 5, caractérisée en ce que la couche de caoutchouc (2, 3) ou, selon le cas, au moins une des couches de caoutchouc (2, 3) contient du caoutchouc de polychloroprène, de butyle, d'éthylène/propylène, d'éthylène/propylène/diène, d'épichlorhydrine, de polyuréthane, de butadiène, de styrènebutadiène ou naturel ou du polyéthylène chloré ou chlorosulfoné.

8. Courroie sans tissu suivant l'une quelconque des revendications 1 à 4, caractérisée en ce que la couche thermoplastique ou, selon le cas, au moins l'une des couches thermoplastiques contient 15-25% en poids de résorcine, de phénol, de crésols ou des mélanges de ceux-ci.

9. Courroie sans tissu suivant l'une quelconque des revendications 1 à 8, caractérisée en ce que la couche de polyamide orientée (1) contient du polyamide 6, du polyamide 66 ou du polyamide 12.

10. Courroie sans tissu suivant l'une quelconque des revendications 1 à 9, caractérisée en ce qu'elle est utilisable comme courroie de transmission ou comme bande transporteuse.

11. Procédé de fabrication d'une courroie sans tissu suivant la revendication 1, caractérisé en ce qu'on mélange au moins 1 partie en poids de résorcine, de phénol, de crésols ou des mélanges de ceux-ci avec 100 parties en poids de caoutchouc à au moins un mélange de caoutchouc ou, selon le cas, 5-30% en poids de résorcine, de phénol, de crésols ou des mélanges de ceux-ci avec des amides de blocage en polyéther ou des copolyamides à au moins un thermoplastique, à partir duquel ou desquels on produit au moins une couche de caoutchouc (2, 3) ou, selon le cas, une couche thermoplastique, puis on l'applique sur une couche de polyamide orientée (1) et on la raccorde avec celle-ci sous pression et à une température entre 140°C et 190°C sans l'action conjointe d'un donneur de méthylène.
